# EUROPÄISCHE PATENTSCHRIFT

(11) **EP 2 427 046 B1**
(45) Veröffentlichungstag und Bekanntmachung des Hinweises auf die Patenterteilung: **03.06.2015**
(21) Anmeldenummer: 10719998.6
(22) Anmeldetag: 03.05.2010
(51) Int. Cl.: A01G 3/02, B26B 13/26, B26B 13/28

(54) **HANDBETÄTIGTE SCHERE**
MANUALLY OPERATED SCISSORS
CISEAUX À ACTIONNEMENT MANUEL

(30) Priorität: 05.05.2009 DE 102009019989
(43) Veröffentlichungstag der Anmeldung: 14.03.2012
(73) Patentinhaber: HUSQVARNA AB, 561 82 Huskvarna (SE)
(72) Erfinder: MAAG, Markus, 89231 Neu-Ulm (DE); REH, Bernhard, 89150 Laichingen (DE)
(74) Vertreter: Finkele, Rolf
(86) Internationale Anmeldenummer: PCT/EP2010/002673
(87) Internationale Veröffentlichungsnummer: WO 2010/127814

(56) Entgegenhaltungen:
- DE-A1-102007 031 145
- US-A- 3 273 240
- US-B1- 6 829 828

## Beschreibung

Die Erfindung betrifft eine handbetätigbare Schere mit einem Ratschenmechanismus, insbesondere als einhändig betätigbare Astschere.

Eine gattungsgemäße Schere ist beispielsweise aus der DE 2981697 U1 bekannt. Die bekannte Ratschenschere weist für den Ratschenmechanismus in einer an einem ersten Griffhebel um eine erste Gelenkachse drehbaren Messerplatte in deren der Schneide bezüglich der Gelenkachse abgewandten hinteren Abschnitt eine Aussparung mit einer Kulisse und mehreren Rastvertiefungen auf. Der zweite Griffhebel ist um eine zweite Gelenkachse relativ zu dem ersten Griffhebel drehbar und ein Ratschenhebel ist an dem zweiten Griffhebel drehbar befestigt und greift mit einem an seinem anderen Ende angeordneten Stift durch die Kulisse und legt sich bei Einwirkung einer Handkraft in eine der Rastvertiefungen ein. Die mehreren Rastvertiefungen entsprechen mehreren verschiedenen Ratschenstufen, welchen wiederum unterschiedlichen, einander überlappenden Winkelbereichen der Schwenkbewegung der Messerschneide von einer ganz geöffneten zu einer ganz geschlossenen Stellung zugeordnet sind. Für einen vollständigen Schneidvorgang muss der Benutzer mehrere Ratschenstufen durchlaufen, indem er aus der ganz geöffneten Messerstellung mit einliegendem Schneidgut mit einer ersten Ratschenstufe beginnend die Griffhebel mit Handkraft schließt und die Messerschneide dabei durch einen Teil des Querschnitts des Schneidguts dringt. Nach Öffnen der Griffhebel greift bei erneuter Schließbewegung der Griffhebel der Stift des Ratschenhebels in die nächste Rastvertiefung ein und die Messerschneide dringt beim Schließen der Griffhebel tiefer in das Schneidgut ein. Durch wiederholtes Öffnen und Schließen wird das Schneidgut in den mehreren Ratschenstufen schrittweise weiter eingeschnitten und schließlich ganz durchtrennt. Durch die mehreren Rat-schenstufen kann auch dickeres Schnittgut mit einer hohen Kraftübersetzung einhändig geschnitten werden.

Aus der DE 1553692 C3 ist eine Astschere bekannt, bei welcher über einen Gelenkstift, welcher an einem eng an einem Gelenk eines verschwenkbaren Griffhebels drehbar gelagerten Hebel festigt ist, und über eine Reihe von Rastnuten eine veränderliche Öffnungsweite der Griffhebel und eine veränderliche Kraftübersetzung wählbar sind, wobei eine größere Öffnungsweite mit einer höheren Kraftübersetzung korreliert ist. Mittels einer Klinke kann eine bewegliche Schneidbacke eng an einen verschwenkbaren Griffhebel angebunden werden, wodurch bei geringer Kraftübersetzung eine geringe Öffnungsweite der Griffhebelanordnung vor-gegeben wird, welche eine Bedienung mit nur einer Hand erlaubt.

Aus der deutschen Offenlegungsschrift DE 10 2007 031 145 A1 ist eine hand-betätigbare Schere bekannt, bei welcher die von einem Nutzer an den Griffen der Schere aufgebrachte Druckkraft über einen Übertragungsarm in eine Drehbewegung einer Scherenschneide übertragen wird. Indem der Übertra-gungsarm in unterschiedliche Stellungen bringbar Ist, kann die Schere sowohl im Ratschenbetrieb als auch mit einem Direktschnitt betrieben werden. Hierzu ist in der Schere ein komplexer Mechanismus realisiert, welcher die Umschaltung zwischen einem Ratschenbetrieb und einem Direktschnitt teilweise automatisch gestaltet. Hierbei wird vom Ratschenbetrieb automatisch in den Direktschnitt umgeschaltet, sobald sich die Schneiden der Schere vollständig schließen. Andererseits bewirkt während eines Direktschnitts eine Schwenkung der Griffe in Öffnungsstellung eine automatische Umschaltung in den Ratschenbetrieb. Dies auch wenn diese Bewegung unbeabsichtigt erfolgt, beispielsweise bei Lockerung des Griffes der Hand des Scherennutzers.

Der vorliegenden Erfindung liegt die Aufgabe zugrunde, die Handhabung einer Ratschenschere der im Oberbegriff des Patentanspruchs 1 genannten Art weiter zu verbessern.

Die Erfindung ist im Patentanspruch 1 beschrieben. Die abhängigen Ansprüche enthalten vorteilhafte Ausgestaltungen und Weiterbildungen der Erfindung.

Durch das manuell zwischen zwei Funktionsstellungen verlagerbare, vorteilhafterweise dauerhaft und unverlierbar mit der Ratschenschere verbundene Sperrglied kann vorteilhafterweise durch den Benutzer alternativ zu der Ratschenfunktion eine Betriebsart der Schere gewählt werden, in welcher diese nach Art einer herkömmlichen Schere ohne Ratschenfunktion bei unveränderter maximaler Öffnungsweite der Schneidenanordnung einsetzbar ist und der Griffhebel einen Direktschnitt durchführt, bei welchem eine einzige vollständige Schließbewegung der Griffhebel zugleich eine vollständige Schließstellung der

Schneidenanordnung aus der vollständig geöffneten Stellung in die vollständig geschlossene Endstellung bewirkt. Vorteilhafterweise kann der Benutzer in jedem Stadium des Direktschnitts, wenn z. B. seine Handkraft für die Durchführung des Direktschnitts nicht ausreicht, das Sperrglied manuell aus der zweiten in die erste Funktionsstellung verlagern und dadurch in den kraftsparendere Ratschen-Betriebsmodus für den weiteren Schnittvorgang wechseln.

Der Benutzer kann in einer ersten Ausführung manuell direkt auf das Sperrglied zugreifen, um dieses zwischen den beiden Funktionsstellungen zu verlagern. In anderer Ausführung kann das Sperrglied mit einem Betätigungselement gekoppelt sein, wobei eine manuelle Betätigung des Betätigungselements eine Verlagerung des Sperrglieds zwischen den beiden Funktionsstellungen bewirkt. Das Sperrglied wird durch manuell überwindbare Verrastung, Klemmung, Federeinwirkung oder dergleichen in einer oder beiden Funktionsstellungen stabil gegen unbeabsichtigte Verlagerung gehalten sein.

Vorteilhafterweise ist eine manuelle Einwirkung auf das Sperrglied oder das Betätigungsglied durch den Benutzer einhändig mit der auch die Griffhebel umgreifenden Hand möglich wofür das Sperrglied oder das Betätigungsglied in Reichweite der Finger der Hand angeordnet ist.

Das Sperrglied bzw. das Betätigungsglied kann für die Verlagerung vorteilhafterweise geführt verschiebbar oder vorzugsweise schwenkbar an der Schere, insbesondere an dem zweiten Griffhebel gehalten sein.

Das Sperrglied überträgt in der zweiten Funktionsstellung ein auf die Griffhebel ausgeübte Handkraft von dem zweiten Griffhebel auf einen der Messerschneide bezüglich einer ersten Drehachse an dem ersten Griffhebel abgewandten hinteren Abschnitt einer Messerplatte oder einer vergleichbaren ersten Schneidbacke. Die Kraftübertragung von dem zweiten Griffhebel über den Ratschenhebel auf die Messerplatte ist aufgehoben. Der zweite Griffhebel ist in aus dem Stand der Technik bekannter Weise um eine zweite Drehachse, welche seitlich von der ersten Achse beabstandet ist, drehbar an dem ersten Griffhebel gehalten. Die Messerschneide kann auf ein als weitere Schneide oder als Amboss ausgebildetes Gegenmesser als zweite Schneidbacke wirken, welches bezüglich des ersten Griffhebels als ortsfest angesehen werden kann.

Der hintere Abschnitt der Messerplatte und das Sperrglied in der zweiten Funktionsstellung sind vorteilhafterweise in dem der Messerschneide bezüglich deren erster Drehachse abgewandten Raum zwischen den beiden Griffhebeln angeordnet. In der ersten Funktionsstellung kann das Sperrglied vorteilhafterweise in einer Vertiefung des zweiten Griffhebels einliegen.

Vorteilhafterweise kann durch das Sperrglied in dessen zweiter Funktionsstellung der Schneidkraftverlauf einer herkömmlichen Schere, bei welcher beide Schneidbacken mit jeweils einem der Griffhebel verbunden sind und das Gewerbe nur eine Drehachse umfasst, gut nachgebildet werden, so dass der Benutzer die Handhabung bei in der zweiten Funktionsstellung befindlichen Sperrglied wie bei einer herkömmlichen Schere empfindet.

Vorteilhafterweise variiert hierfür ein Winkel zwischen einer bezüglich der Messerplatte festen ersten Längsachse und einer bezüglich des zweiten Griffhebels festen zweiten Längsachse, welche beide in der Schneidebene angenommen sind, über den Verlauf des Schneidvorgangs des Direktschnitts um weniger als 5°, vorzugsweise weniger als 3°.

In vorteilhafter Weiterbildung kann auch vorgesehen sein, im Bereich der die Handkraft von dem zweiten Griffhebel über das Sperrglied auf den hinteren Abschnitt der Messerplatte übertragenden Anlagefläche des Sperrglieds an der Messerplatte eine solche Anlagefläche auf Seiten des Sperrglieds und/oder auf Seiten der Messerplatte als eine Steuerkurve auszubilden, entlang derer sich die kraftübertragende Anlagefläche im Verlauf des Schneidvorgangs verlagert. Durch eine solche Steuerkurve kann der Verlauf der Kraftübersetzung schließwinkelabhängig verändert und insbesondere im Bereich einer mittleren Schließstellung, in welchem bei Schnittgut mit rundem Querschnitt typischerweise der Schneidwiderstand maximal ist, erhöht werden.

Bei in der ersten Funktionsstellung befindlichem Sperrglied ist die Schere in der bekannten Ratschenfunktion benutzbar. Die Handkraft wird dabei vorteilhafterweise über einen an einem Hebelgelenk an dem zweiten Griffhebel angelenkten Ratschenhebel, welcher mit einem Mitnehmerelement in jeweils eine von mehreren Rastpositionen der Ratschenstruktur eingreift, auf die Messerplatte übertragen. Das genannte Hebelgelenk bildet mit dem Mitnehmerelement und der Drehachse des zweiten Griffhebels vorteilhafterweise ein stumpfwinkliges Dreieck, dessen kürzere Seiten untereinander ein Verhältnis der Seitenlängen zwischen 0,5 und 2 besitzen.

Die maximale Öffnungsweite der Schneidenanordnung und/oder die maximale Öffnungsweite der Griffhebel sind vorteilhafterweise unabhängig von der jeweils gewählten Funktionsstellung des Sperrglieds.

Die Erfindung ist nachfolgend anhand bevorzugter Ausführungsbeispiele unter Bezugnahme auf die Abbildungen noch eingehend veranschaulicht. Dabei zeigt:
- Fig. 1: eine geöffnete Schere im Ratschen-Modus,
- Fig. 2: eine geöffnete Schere im Direktschnitt-Modus,
- Fig. 3: eine geschlossene Schere im Direktschnitt-Modus,
- Fig. 4: eine Variante zu Fig. 2,
- Fig. 5: die Variante nach Fig. 4 in geschlossenem Zustand,
- Fig. 6: die Schere nach Fig. 4 und Fig. 5 im Ratschen-Modus.

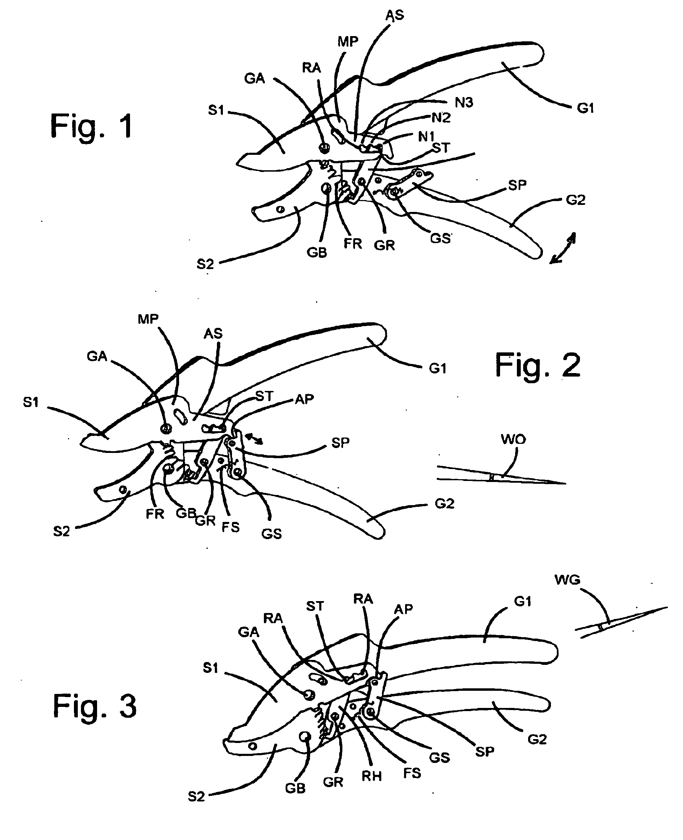

Fig. 1 zeigt in schematischer Darstellung eine handbetätigbare Ratschenschere, insbesondere als Astschere, nach der vorliegenden Erfindung. Die Schere ist maximal weit geöffnet, so dass das Scherenmaul zwischen der Messerschneide S1 und dem Gegenmesser S2 maximal weit offen ist. Die Griffhebel G1 und G2 befinden sich in diesem Öffnungszustand gleichfalls in maximal auseinander liegender Schwenkstellung um ein Gelenk GB. Das Gegenmesser S2 und der erste Griffhebel G1 sind starr miteinander verbunden und können insbesondere auch überwiegend einteilig ausgeführt sein. Das Gegenmesser S2 kann insbesondere als Amboss-Schneidbacke ausgeführt sein. Eine Messerplatte MP ist in einem ersten Gelenk GA drehbar an dem ersten Griffhebel G1 gehalten. Die Messerplatte MP enthält oder trägt die Messerschneide S1 und weist dieser bezüglich des Gelenks GA abgewandt einen hinteren Abschnitt AS auf, in welchem eine Aussparung RA mit mehreren Rastnuten N1, N2, N3 ausgebildet ist. Der hintere Abschnitt AS liegt in dem der durch Messerschneide S1 und Gegenmesser S2 gebildeten Schneidenanordnung abgewandten Raum zwischen den Griffhebeln G1 und G2.

Der Griffhebel G2 ist in einem zweiten Gelenk GB drehbar an dem ersten Griffhebel G1 oder einem starr mit diesem verbundenen Grundkörper gehalten. Im folgenden sei ein Grundkörper mit dem Griffhebel G1 und dem Gegenmesser S2 als ortsfest angesehen und die Messerplatte MP und der zweite Griffhebel als demgegenüber beweglich bezeichnet. Die Bewegungsrichtung der Messerplatte mit der Schneidenanordnung S1 und die Bewegungsrichtung des zweiten Griffhebels G2 sind mit gekrümmten Doppelpfeilen angedeutet.

An dem zweiten Griffhebel G2 ist dem Gegenmesser S2 abgewandt und von dem zweiten Gelenk GB beabstandet in einem Gelenk GR ein Ratschenhebel RH drehbar gelagert. Der Ratschenhebel RH ist durch eine Druckfeder FR in Fig. 1 im Gegenuhrzeigersinn gegen einen Anschlag gedrückt. An dem dem hinteren Abschnitt AS der Messerplatte zuweisenden Ende des Ratschenhebels greift ein Stift ST, welcher vorzugsweise fest mit dem Ratschenhebel verbunden ist, in die Aussparung RA in dem hinteren Abschnitt AS der Messerplatte MP ein. Der Stift befindet sich in der in Fig. 1 dargestellten geöffneten Position an dem dem Gelenk GA abgewandten Ende der Aussparung RA bei der ersten Rastnut N1.

Beim Verschwenken des zweiten Griffhebels G2 durch eine Handkraft eines Benutzers in Richtung des ersten Griffhebels G1 um die Drehachse in dem zweiten Gelenk GB wird der Stift ST in die erste Rastnut N1 eingedrückt und die Messerschneide drückt auf ein in das Schneidmaul zwischen der Schneide S1 und dem Gegenmesser S2 eingelegtes Schnittgut GU. Die auf den zweiten Griffhebel G2 in Richtung des ersten Griffhebels G1 wirkende Handkraft wird über das Gelenk GR und den Ratschenhebel auf den hinteren Abschnitt AS der Messerplatte MP übertragen und bewirkt eine Schließbewegung der Messerschneide S1 in Richtung des Gegenmessers S2. Der Stift ST bleibt aufgrund der drückenden Kraft in der ersten Rastnut N1. Der Rasthebel RA wird entgegen der Federkraft der Druckfeder FR im Uhrzeigersinn um das Gelenk GR verdreht.

Das zweite Gelenk GB, das Gelenk GR des Ratschenhebels und der Stift ST als Anlagepunkt an dem hinteren Abschnitt AS der Messerplatte MP bilden ein stumpfwinkliges Dreieck mit dem stumpfen Winkel bei dem Gelenk GR. Die kurzen Seiten des Dreiecks als Strecken zwischen GB und GR einerseits und GR und ST andererseits unterscheiden sich vorteilhafterweise um maximal den Faktor 2, vorzugsweise um maximal den Faktor 1,5. Typischerweise sind die genannten kürzeren Seiten des Dreiecks annähernd gleich lang.

Die Schließbewegung des zweiten Griffhebels G2 auf den ersten Griffhebel G1 zu führt auch bei maximaler Annäherung des zweiten Griffhebels G2 an den ersten Griffhebel G1 nicht zu einem vollständigen Schließen des Schneidmauls. Das Schnittgut GU wird nur zum Teil durchgeschnitten und die Messerschneide S1 bleibt innerhalb des Querschnitts des Schnittguts GU, wenn der Griffhebel G2 wieder unter Öffnung der Griffhebelanordnung von dem ersten Griffhebel G1 weg bewegt wird. Das Öffnen der Griffhebelanordnung kann vorteilhafterweise unter dem Eindruck einer zuvor beim Schließen gespannten Feder erfolgen.

Wenn die Griffhebelanordnung erneut geöffnet ist, liegt der Stift ST des Ratschenhebels relativ zu der Aussparung RA gegenüber der Ausgangssituation nach Fig. 1 in Richtung des Gelenks GA verschoben, da die Messerplatte durch das teilweise Einschneiden der Schneide S1 in das Schnittgut GU eine andere Drehstellung einnimmt. Beim erneuten Schließen der Griffhebelanordnung rückt der Stift ST in die nächste Rastnut N2 ein und bewirkt eine weitere Schließbewegung der Messerschneide S1 in Richtung auf das Gegenmesser S2, wobei auch dieser zweite Betätigungsvorgang der Griffhebelanordnung in der Regel nicht zum vollständigen Durchschneiden des Schnittgutes GU führt. Nach nochmaligem Öffnen der Griffhebelanordnung, Schließbewegung der Griffhebelanordnung mit Einrücken des Stiftes ST in die dritte und letzte Rastnut N3 und vollständigem Schließen der Griffhebelanordnung nimmt auch die Schneidenanordnung eine vollständig geschlossene Stellung ein, in welcher das Schnittgut GU vollständig durchtrennt ist. Nach Öffnen der Griffhebelanordnung nimmt diese dann wieder die in Fig. 1 skizzierte Ausgangsposition ein. Insbesondere bei mehr als drei Ratschenstufen können auch Ratschenstufen übersprungen werden.

Der vorstehend beschriebene Schneidvorgang im Ratschenmodus ist beispielsweise aus dem eingangs genannten Stand der Technik und von marktüblichen Ratschenscheren her bekannt.

Bei der erfindungsgemäßen Schere ist zusätzlich ein Sperrglied vorgesehen, welches in dem Beispiel nach Fig. 1 als Sperrhebel SP ausgeführt ist. Der Sperrhebel SP ist um ein weiteres Gelenk SG an dem zweiten Griffhebel schwenkbar gehalten, was durch den weiteren gekrümmten Doppelpfeil angedeutet ist.

In der in Fig. 1 dargestellten Situation befindet sich der Sperrhebel SP in der ersten Funktionsstellung, in welcher die Schere im Ratschenmodus wie beschrieben betreibbar ist. Durch Verschwenken des Sperrhebels SP aus der dargestellten Position entgegen dem Uhrzeigersinn um das Gelenk SG wird der Sperrhebel SP in die in Fig. 2 dargestellte zweite Funktionsstellung gebracht, in welcher der hintere Abschnitt AS der Messerplatte MP und der Sperrhebel SP an einer annähernd punktförmigen Anlagefläche AP aneinander anliegen oder sich zumindest gegenüber stehen. Eine Anlage wird spätestens erreicht, wenn der zweite Griffhebel G2 um das Gelenk GB in Richtung des ersten Griffhebels G1 unter Einwirkung der Handkraft eines Benutzers verschwenkt wird. Bei einer Schließbewegung der Griffhebelanordnung wird die auf den zweiten Griffhebel G2 ausgeübte Handkraft über das Gelenk GS und den Sperrhebel SP sowie über die Anlagefläche AP auf den hinteren Abschnitt AS der Messerplatte übertragen und diese zu einer das Schneidmaul schließenden Drehbewegung um das Gelenk GA veranlasst. Über den Ratschenhebel RH wird bei dieser Schließbewegung keine Druckkraft von dem zweiten Griffhebel auf die Messerplatte übertragen. Der Stift ST kann sich bei der Schließbewegung weitgehend kräftefrei innerhalb der Aussparung RA bewegen. Eventuelle Kräfte aufgrund der Federbelastung des Ratschenhebels sind gegenüber der eingesetzten Handkraft vernachlässigbar.

Im Unterschied zu der zu Fig. 1 beschriebenen ersten Schließbewegung mit nicht vollständigem Schließen des Schneidmauls wird bei einer Schließbewegung mit in der in Fig. 2 dargestellten Position befindlichen Sperrhebel bei maximaler Annäherung des zweiten Griffhebels G2 an den ersten Griffhebel G1 um das zweite Gelenk GB die Messerschneide S1 vollständig bis zum Gegenmesser bewegt und das Schneidenmaul vollständig geschlossen und somit vor Beginn des Schließvorgangs in das Schneidenmaul eingelegtes Schnittgut vollständig durchtrennt. Es erfolgt somit ein als Direktschnitt bezeichneter vollständiger Schneidvorgang mit nur einer Schließbewegung der Griffhebelanordnung wie bei einer herkömmlichen Schere ohne Ratschenfunktion.

In Fig. 3 ist die entsprechende geschlossene Stellung der Schere nach Abschluss des Schneidvorgangs dargestellt. Der Stift ST des Ratschenhebels hat sich während des Schneidvorgangs innerhalb der Aussparung RA zu der dritten Rastnut N3 verschoben, ohne aber einen Kraftbeitrag zum Schließen der Schneidenanordnung zu leisten. Der Sperrhebel SP hat bei dem Schließvorgang eine Verschwenkung im Uhrzeigersinn um das Gelenk GS erfahren. Um beim erneuten Öffnen der Griffhebelanordnung, welche über den Ratschenhebel und den Stift ST auch automatisch mit einer Öffnung der Schneidenanordnung verbunden ist, den Sperrhebel in der zweiten Funktionsstellung entsprechen dem Direktschnitt-Modus der Schere zu halten, kann eine Feder FS in einer der bekannten Bauformen auf den Sperrhebel SP einwirken.

Der Sperrhebel hält die in dem hinteren Abschnitt ausgebildete Raststruktur von dem zweiten Griffhebel in einem Abstand während des Direktschnitt-Vorgangs veränderlich und größer ist als der Abstand der Raststruktur von dem zweiten Griffhebel im Ratschen-Modus bei jeweils entsprechenden Schließstellungen der Griffhebelanordnung. Der Abstand der Anlagefläche AP von dem Gelenk GS beträgt vorteilhafterweise wenigstens 75 % des Abstands des Gelenks GA vom Gelenk GB.

In dem Direktschnitt-Modus kann vorteilhafterweise der Verlauf der Kraftübersetzung während des Ablaufs des Schließvorgangs der Griffhebelanordnung bzw. der Schneidenanordnung an den Verlauf der Kraftübersetzung einer herkömmlichen Schere mit direkter starrer Verbindung von Messerplatte MP und zweitem Griffhebel und nur einem Gelenk im Scherengewerbe angenähert sein. Hierfür kann vorteilhaft sein, wenn eine erste gedachte Längsachse, welche bezüglich der Messerplatte fest ist und eine zweite gedachte Längsachse, welche bezüglich des zweiten Griffhebels G2 fest ist, sich in ihrer Winkelausrichtung während des Schneidvorgangs nur wenig verändern. Die genannten gedachten Längsachsen seien beide in der senkrecht zu den Drehachsen der Gelenke GA, GB liegenden Schneidebene der Schere angenommen. Die Lage der Längsachsen innerhalb der Messerplatte MP bzw. des zweiten Griffhebels G2 ist an sich beliebig. Beispielsweise kann für eine erste, bezüglich der Messerplatte MP feststehende Längsachse eine das Gelenk GA und den Anlagepunkt AP verbindende Gerade und für die zweite, bezüglich des zweiten Griffhebels feste Längsachse als eine das zweite Gelenk GB und das Gelenk GS des Sperrhebels SP verbindende Gerade angenommen werden. Diese beiden Geraden schließen in der geöffneten Stellung der Schere nach Fig. 2 einen Winkel WO von ca. 6,2° und in der geschlossenen Stellung der Schere nach Fig. 3 einen Winkel WG von ca. 6,1° ein. Die Veränderung eines solchen Winkels zwischen zwei Längsachsen der genannten Art beträgt über den Verlauf des Schneidvorgangs vorteilhafterweise nicht mehr als 5°, vorzugsweise nicht mehr als 3°. Die vorstehend für die an sich willkürlich wählbaren Längsachsen gewählten Geraden durch die Punkte GA, AP bzw. GB, GS schließen vorteilhafterweise einen Winkel ein, der 15° nicht übersteigt.

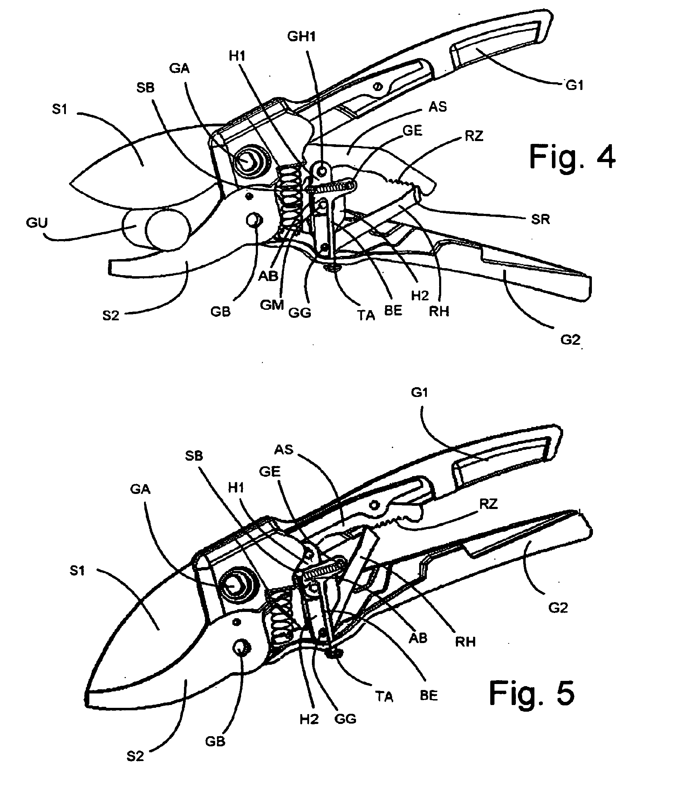

Fig. 4 zeigt in zu Fig. 2 entsprechender Darstellung eine abgewandelte Ausführung. Der Ratschenmechanismus ist in diesem Fall mit einer Spitze SR am Ende des Ratschenhebels RH und einer gezahnten Raststruktur RZ am hinteren Abschnitt AS der Messerplatte ausgeführt, was prinzipiell an der grundsätzlichen Funktion des Rastmechanismus im Ratschen-Modus der Schere keinen Einfluss hat. Allenfalls können die bei der dargestellten Rastverzahnung RZ gegebenen mehreren Stufen leichter übersprungen werden, was aber auch bei den Rastnuten N1 bis N3 nach Fig. 1 der Fall ist. Der Ratschenbetrieb der in Fig. 4 dargestellten Schere sei deshalb nicht weiter beschrieben.

Als Sperrglied ist in dem in Fig. 4 skizzierten Beispiel eine Doppelhebelanordnung mit zwei Teilhebeln H1, H2 gewählt, welche unter einander in einem mittleren Gelenk GM gelenkig verbunden sind. Der Teilhebel H1 ist in einem Gelenk GH1 mit dem hinteren Abschnitt AS der Messerplatte gelenkig verbunden, der Teilhebel H2 in einem Gelenk GG mit dem zweiten Griffhebel G2. Das Gelenk GG ist im vorliegenden Fall für den Teilhebel H2 und den Ratschenhebel RH gemeinsam genutzt. Die Teilhebel H1 und H2 befinden sich in der in Fig. 4 dargestellten zweiten Funktionsstellung des Sperrgliedes in einer gestreckten Stellung, in welcher die Gelenke GG, GM und GH1 im wesentlichen in einer Linie liegen, wobei das Gelenk GM auch gegen die Verbindungslinie von GG und GH1 leicht nach links versetzt sein kann. Ein Betätigungselement BE ist in einem Gelenk GE mit dem zweiten Teilhebel H2 verbunden. Dieses Gelenk GE ist über eine Feder FB nach links gezogen und drückt die Hebelanordnung, insbesondere den Teilhebel H1 gegen einen linksseitigen Anschlag, wodurch die gestreckte Stellung der Hebel H1, H2 stabilisiert ist.

In dem in Fig. 4 dargestellten Direktschnitt-Modus mit stabil gestreckter Hebelanordnung H1, H2 wird bei einer vollständigen Schließbewegung des zweiten Griffhebels G2 auf den ersten Griffhebel G1 zu auch die Messerschneide S1 vollständig bis zu dem Gegenmesser S2 verschwenkt und das Schnittgut in einem Zug durch Direktschnitt vollständig durchtrennt.

Das Betätigungselement weist gegenüber einem Anschlagelement SB, welches beispielsweise als Stift ausgeführt sein kann und an welchem die Feder FB eingehängt sein kann, eine schräge Gegenanlagefläche AB auf. Das Betätigungselement ragt über die Unterseite des zweiten Griffhebels G2 hinaus und ist über eine an dem hinausragenden Teil angebrachte Taste TA oder dergleichen durch Fingereinwirkung der die Griffhebelanordnung umfassenden Hand des Benutzers in den Griffhebel G2 weiter hinein verschiebbar. Bei einer solchen Verschiebung wird das Betätigungselement BE durch Gleiten der Schrägfläche AB an dem Anschlagelement SB mit seinem oberen, an dem Gelenk GE gelenkig befestigten Teil in Fig. 4 nach rechts verschoben und die Hebelanordnung mit Hebeln H1, H2 knickt in dem Gelenk GM ein.

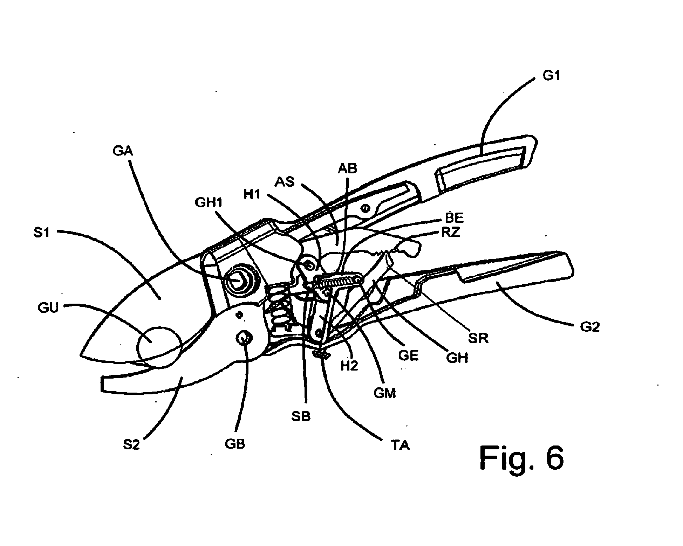

Eine solche Situation ist in Fig. 6 dargestellt, wo angenommen ist, dass der Benutzer in dem Direktschnitt-Modus der in Fig. 4 dargestellten Art das Schnittgut GU teilweise durchschnitten hat, dann aber in den kraftsparenden Ratschenmodus wechseln wollte. Nach Einknicken der Hebelanordnung H1, H2 an dem mittleren Gelenk GM überträgt die Hebelanordnung H1, H2 praktisch keine Druckkräfte von dem zweiten Griffhebel G2 auf die Messerplatte. Eine Kraftübertragung erfolgt nunmehr über den Ratschenhebel RH, der mit seiner endseitigen Spitze in einer Zwischenposition innerhalb der Rastverzahnung RZ liegt. Der weitere Schneidvorgang erfolgt im Ratschen-Modus mit gegebenenfalls mehrfachem wiederholtem Schließen und Öffnen der Griffhebelanordnung, bis die Schneidenanordnung vollständig geschlossen und das Schnittgut GU durchtrennt ist.

Die Hebelanordnung mit Teilhebeln H1, H2 wird beim Öffnen der Griffhebelanordnung unter der Einwirkung der Feder FB jeweils wieder gestreckt. Bei einem mehrfachen Öffnen und Schließen im Ratschenmodus muss daher die Taste TA gedrückt bleiben oder die eingeknickte Stellung der Hebel H1, H2 ist auf andere Weise zu gewährleisten. Beispielsweise kann die Taste TA in einer gedrückten Position arretierbar sein.

In nicht dargestellter Ausführungsform kann das Sperrglied auch in der zweiten Funktionsstellung feststehend, also ohne die gelenkige Verbindung des Sperrhebels SP mit dem Griffhebel G2 oder die gelenkigen Verbindungen der Hebel H1, H2 mit dem Griffhebel G2 und der Messerplatte MP ausgeführt sein. Da sich die Messerplatte während des Schließvorgangs relativ zu dem zweiten Griffhebel verlagert, verlagert sich dann auch die Anlagefläche zwischen Sperrglied und hinterem Abschnitt der Messerplatte während des Schließvorgangs. Eine solche Verlagerung kann durch eine gleitende Relativbewegung erfolgen, was aber Reibungsverluste und eventuell Abrieb an den betroffenen Flächen, welche die gesamte vom Benutzer angewandte Handkraft quer zur Bewegungsrichtung der Gleitbewegung übertragen, führen kann. In bevorzugter Ausführung ist auf wenigstens einer Seite der kraftübertragenden Anlage, also entweder auf Seiten des hinteren Abschnitts AS der Messerplatte MP oder auf Seiten des Sperrglieds eine drehbar gelagerte Rolle vorgesehen. Die Gegenfläche, auf welcher die Rolle abrollt, oder welche eine Anlage für eine gleitende Bewegung bildet, kann vorteilhafterweise durch eine gezielt geformte Steuerkurve gebildet sein, bei deren Gestaltung der Verlauf der Kraftübersetzung gegenüber beispielsweise einem Verlauf der Scherenanordnung nach Fig. 2 und Fig. 3 abgeändert werden kann, um beispielsweise in einer mittleren Schließstellung mit maximalem Durchmesser des Schnittguts an der Schneidkante des Schneidmessers eine Erhöhung der Kraftübersetzung zu erreichen.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Handbetätigbare Schere mit zwei relativ zueinander beweglichen Griffhebeln und einem mehrstufigen Ratschenmechanismus, über welchen eine auf die Handhebel ausgeübte Handkraft auf eine zwischen einer maximalen Öffnungsstellung und einer vollständig geschlossenen Endstellung verschwenkbaren Schneidenanordnung übertragbar ist,
welche eine bezüglich eines ersten Griffhebels um eine erste Gelenkachse drehbar gelagerte Messerplatte mit einer Messerschneide enthält,
wobei verschiedene Stufen des Ratschenmechanismus unterschiedlichen Schließwinkelbereichen der Schneidenanordnung zugeordnet sind und ein vollständiges Schließen der Schneidenanordnung mit einem Schnittgut aus einer maximalen Öffnungsstellung durch Öffnen und Schließen des Griffhebels erfolgt, wobei ein manuell zwischen einer ersten und einer zweiten Funktionsstellung verlagerbares Sperrglied (SP) vorgesehen ist,
welches in der ersten Funktionsstellung die Einschaltung des mehrstufigen Ratschenmechanismus (RH, RA) in den Kraftübertragungsweg bewirkt und in der zweiten Funktionsstellung die Griffhebel (G1, G2) in der Art (SP, AP,
AS) mit der Schneidenanordnung (S1, S2) koppelt, dass eine Bewegung der Schneidenanordnung bis zur vollständig geschlossenen Endstellung durch eine einmalige Schließbewegung der Griffhebel möglich ist,
wobei in der zweiten Funktionsstellung der Kraftübertragungsweg zwischen Griffhebel (G1, G2) und der Schneidenanordnung (S1, S2) über das Sperrglied verläuft und hierbei der mehrstufige Ratschenmechanismus aus diesem Kraftübertragungsweg ausgeschaltet ist,
**dadurch gekennzeichnet,**
**dass** das Sperrglied (SP) stabil in einer oder beiden Funktionsstellungen mittels einer manuell überwindbaren Verrastung, Klemmung, Federeinwirkung oder dergleichen gegen unbeabsichtigte Verlagerung gehalten ist.

2. Schere nach Anspruch 1, **dadurch gekennzeichnet, dass** das Sperrglied zwischen der ersten und der zweiten Funktionsstellung verschiebbar geführt ist.

3. Schere nach Anspruch 1, **dadurch gekennzeichnet, dass** das Sperrglied zwischen der ersten und der zweiten Funktionsstellung verschwenkbar gelagert ist.

4. Schere nach einem der Ansprüche 1 bis 3, **dadurch gekennzeichnet, dass** das Sperrglied (SP) an dem zweiten Griffhebel (G2) befestigt ist.

5. Schere nach Anspruch 4, **dadurch gekennzeichnet, dass** das Sperrglied in der ersten Funktionsstellung in einer Aussparung des zweiten Griffhebels einliegt.

6. Schere nach einem der Ansprüche 1 bis 5, **dadurch gekennzeichnet, dass** das Sperrglied (SP) in dem der Messerschneide (S1) abgewandten Raum zwischen den beiden Griffhebeln (G1, G2) angeordnet ist.

7. Schere nach einem der Ansprüche 1 bis 6, **dadurch gekennzeichnet, dass** das Sperrglied in der zweiten Funktionsstellung einen der ersten Gelenkachse abgewandten hinteren Abschnitt (AS) der Messerplatte (MP) gegen die Handkraft an dem zweiten Griffhebel (G2) abstützt.

8. Schere nach Anspruch 7, **dadurch gekennzeichnet, dass** das Sperrglied (SP) in der zweiten Funktionsstellung den hinteren Abschnitt (AS) der Messerplatte (MP) in einem gegebenenfalls schließwinkelabhängigen Abstand von dem zweiten Griffhebel (G2) hält, welcher größer ist als die bei gleichen Schießwinkeln in der Ratschen-Betriebsart auftretenden Abstände.

9. Schere nach einem der Ansprüche 1 bis 8, **dadurch gekennzeichnet, dass** in der zweiten Funktionsstellung das Sperrglied bei der Bewegung der Handhebel und der damit gekoppelten Bewegung der Schneidenanordnung um eine erste Schwenkachse (GS) an dem zweiten Griffhebel (G2) und um eine zweite Schwenkachse (AP) an dem hinteren Abschnitt (AS) der Messerplatte schwenkbar abgestützt ist.

10. Schere nach Anspruch 9, **dadurch gekennzeichnet, dass** ein Winkel (WO, GWG) zwischen einer ersten Linie durch die Gelenkachse (GA) der Messerplatte und durch die zweite Schwenkachse (AP) und zwischen einer zweiten Linie durch die zweite Schwenkachse (GS) und durch eine zweite Gelenkachse (GB), an der die beiden Griffhebel (G1, G2) gelenkig miteinander verbunden sind, in der zweiten Funktionsstellung des Sperrglieds einen Winkelwert von 15° nicht überschreitet.

11. Schere nach einem der Ansprüche 1 bis 10, **dadurch gekennzeichnet, dass** ein Winkel (WO, WG) zwischen einer bezüglich der Messerplatte (MP) festen ersten Längsachse und einer bezüglich des zweiten Griffhebels (G2) festen zweiten Längsachse bei in der zweiten Funktionsstellung befindlichen Sperrglied sich über den Bewegungsverlauf bei der Betätigung der Griffhebel um nicht mehr als 5°, vorzugsweise nicht mehr als 3° ändert.

12. Schere nach einem der Ansprüche 1 bis 8, **dadurch gekennzeichnet, dass** an dem Sperrglied und/oder an dem hinteren Abschnitt der Messerplatte wenigstens eine Steuerkurve ausgebildet ist und in der zweiten Funktionsstellung des Sperrglieds das Sperrglied und die Messerplatte an einem entlang der Steuerkurve schließwinkelabhängig verschobenen Anlagepunkt gegeneinander zur Übertragung der Handkraft abgestützt sind.

13. Schere nach einem der Ansprüche 1 bis 12, **dadurch gekennzeichnet, dass** das Sperrglied (H1, H2) mit einem Betätigungselement (BE) gekoppelt ist und durch manuelle Betätigung des Betätigungselements zwischen den Funktionsstellungen verlagerbar ist.

14. Schere nach einem der Ansprüche 1 bis 13, **dadurch gekennzeichnet, dass** das Sperrglied durch den Benutzer einhändig mit einer die Griffhebel umgreifenden Hand zwischen den Funktionsstellungen verlagerbar ist.

15. Schere nach einem der Ansprüche 1 bis 14, **dadurch gekennzeichnet, dass** die maximale Öffnungsweite der Schneidenanordnung und/oder die maximale Öffnungsweite der Griffhebel von der Funktionsstellung des Sperrglieds unabhängig sind.

## Claims

1. Manually actuable shears having two grip levers, which can be moved relative to one another, and having a multi-stage ratchet mechanism, via which a manual force exerted on the hand levers can be transmitted to a blade arrangement, which can be pivoted between a fully open position and a fully closed end position,
the sheers containing a cutter plate which has a cutter blade and is mounted such that it can be rotated about a first articulation axis in relation to a first grip lever,
wherein different stages of the ratchet mechanism are assigned to different closing-angle regions of the blade arrangement, and the blade arrangement with cutting material therein can be fully closed from a fully open position by virtue of the grip lever being repeatedly opened and closed,
wherein a blocking member (SP), which can be shifted manually between a first and a second functional position, is provided,
this blocking member, in the first functional position, causing the multi-stage ratchet mechanism (RH, RA) to be integrated in the force-transmission path and, in the second functional position, coupling the grip levers (G1, G2) to the blade arrangement (S1, S2) in such a manner (SP, AP, AS) that the blade arrangement can be moved into the fully closed end position by a single closing movement of the grip levers,
wherein, in the second functional position, the forcetransmission path between the grip levers (G1, G2) and the blade arrangement (S1, S2) runs via the blocking member, and the multi-stage ratchet mechanism here is removed from this force-transmission path,
**characterized**
**in that** the blocking member (SP) is retained in a stable state, such that it cannot be shifted unintentionally, in one or both functional positions by means of a manually disengageable latching means, clamping means, spring-action means or the like.

2. Sheers according to Claim 1, **characterized in that** the blocking member is guided such that it can be displaced between the first and the second functional positions.

3. Sheers according to Claim 1, **characterized in that** the blocking member is mounted such that it can be pivoted between the first and the second functional positions.

4. Sheers according to one of Claims 1 to 3, **characterized in that** the blocking member (SP) is fastened on the second grip lever (G2).

5. Sheers according to Claim 4, **characterized in that** the blocking member, in the first functional position, is incorporated in an aperture of the second grip lever.

6. Sheers according to one of Claims 1 to 5, **characterized in that** the blocking member (SP) is arranged in the space between the two grip levers (G1, G2) which is directed away from the cutter blade (S1).

7. Sheers according to one of Claims 1 to 6, **characterized in that** the blocking member, in the second functional position, supports a rear portion (AS) of the cutter plate (MP), said rear portion being directed away from the first articulation axis, on the second grip lever (G2) counter to the manual force.

8. Sheers according to Claim 7, **characterized in that** the blocking member (SP), in the second functional position, keeps the rear portion (AS) of the cutter plate (MP) spaced apart from the second grip lever (G2) by a distance which is possibly closing-angle dependent and is greater than the distances which occur at the same closing angles in ratchet operation.

9. Sheers according to one of Claims 1 to 8, **characterized in that**, in the second functional position, the blocking member, during movement of hand levers and the associated movement of the blade arrangement, is supported on the second grip lever (G2) such that it can be pivoted about a first pivot axis (GS) and on the rear portion (AS) of the cutter plate such that it can be pivoted about a second pivot axis (AP).

10. Sheers according to Claim 9, **characterized in that**, in the second functional position of the blocking member, an angle (WO, GWG) between a first line through the articulation axis (GA) of the cutter plate and through the second pivot axis (AP) and between a second line through the second pivot axis (GS) and through a second articulation axis (GB), along which the two grip levers (G1, G2) are connected to one another in an articulated manner, does not exceed a value of 15°.

11. Sheers according to one of Claims 1 to 10, **characterized in that**, with the blocking member located in the second functional position, an angle (WO, WG) between a first longitudinal axis, which is fixed in relation to the cutter plate (MP), and a second longitudinal axis, which is fixed in relation to the second grip lever (G2), changes by no more than 5°, preferably by no more than 3°, over the course of movement upon activation of the grip levers.

12. Sheers according to one of Claims 1 to 8, **characterized in that** at least one control curve is formed on the blocking member and/or on the rear portion of the cutter plate and, in the second functional position of the blocking member, the blocking member and the cutter plate are supported against one another, for transmission of the manual force, at an abutment point which is displaced in a closing-angle-dependent manner along the control curve.

13. Sheers according to one of Claims 1 to 12, **characterized in that** the blocking member (H1, H2) is coupled to an actuating element (BE) and can be shifted between the functional positions by manual actuation of the actuating element.

14. Sheers according to one of Claims 1 to 13, **characterized in that** the user can shift the blocking member between the functional positions using one hand, the hand which grips around the grip levers.

15. Sheers according to one of Claims 1 to 14, **characterized in that** the maximum opening width of the blade arrangement and/or the maximum opening width of the grip levers are/is independent of the functional position of the blocking member.

## Revendications

1. Sécateur à actionnement manuel comprenant deux leviers de préhension mobiles relativement l'un par rapport à l'autre et un mécanisme à cliquet à plusieurs étages, par le biais duquel une force manuelle exercée sur les leviers à main peut être transmise à un ensemble de coupe pouvant être pivoté entre une position d'ouverture maximale et une position d'extrémité complètement fermée, lequel comporte une plaque de lame, dotée d'un tranchant de lame, montée de manière à pouvoir tourner autour d'un premier axe d'articulation par rapport à un premier levier de préhension, différents secteurs angulaires de fermeture de l'ensemble de coupe étant associés à différents étages du mécanisme à cliquet et une fermeture complète de l'ensemble de coupe avec un article à couper à partir d'une position d'ouverture maximale s'effectuant par ouverture et fermeture répétées du levier de préhension,
un organe de verrouillage (SP) pouvant être déplacé manuellement entre une première et une deuxième position fonctionnelle étant prévu, lequel, dans la première position fonctionnelle, provoque la connexion du mécanisme à cliquet (RH, RA) à plusieurs étages dans la voie de transmission de force
et, dans la deuxième position fonctionnelle, accouple les leviers de préhension (G1, G2) à l'ensemble de coupe (S1, S2), dans un mode (SP, AP, AS) tel qu'un déplacement de l'ensemble de coupe jusqu'à la position d'extrémité complètement fermée soit possible par un déplacement de fermeture unique des leviers de préhension,
dans la deuxième position fonctionnelle, la voie de transmission de force entre les leviers de préhension (G1, G2) et l'ensemble de coupe (S1, S2) passant par l'organe de verrouillage et le mécanisme à cliquet à plusieurs étages étant en l'occurrence déconnecté de cette voie de transmission de force,
**caractérisé en ce que**
l'organe de verrouillage (SP) est maintenu de manière stable dans l'une des positions fonctionnelles ou dans les deux, de manière à empêcher un déplacement involontaire, au moyen d'un encliquetage, d'un serrage, d'une action de ressort ou similaire pouvant être surmonté(e) manuellement.

2. Sécateur selon la revendication 1, **caractérisé en ce que** l'organe de verrouillage est guidé de manière coulissante entre la première et la deuxième position fonctionnelle.

3. Sécateur selon la revendication 1, **caractérisé en ce que** l'organe de verrouillage est monté de manière pivotante entre la première et la deuxième position fonctionnelle.

4. Sécateur selon l'une quelconque des revendications 1 à 3, **caractérisé en ce que** l'organe de verrouillage (SP) est fixé au deuxième levier de préhension (G2).

5. Sécateur selon la revendication 4, **caractérisé en ce que** l'organe de verrouillage est logé dans un évidement du deuxième levier de préhension dans la première position fonctionnelle.

6. Sécateur selon l'une quelconque des revendications 1 à 5, **caractérisé en ce que** l'organe de verrouillage (SP) est disposé dans l'espace entre les deux leviers de préhension (G1, G2) opposé au tranchant de lame (S1).

7. Sécateur selon l'une quelconque des revendications 1 à 6, **caractérisé en ce que**, dans la deuxième position fonctionnelle, l'organe de verrouillage supporte une portion (AS) arrière opposée au premier axe d'articulation de la plaque de lame (MP) à l'encontre de la force manuelle sur le deuxième levier de préhension (G2).

8. Sécateur selon la revendication 7, **caractérisé en ce que**, dans la deuxième position fonctionnelle, l'organe de verrouillage (SP) maintient la portion arrière (AS) de la plaque de lame (MP) à une distance, éventuellement dépendante de l'angle de fermeture, par rapport au deuxième levier de préhension (G2), laquelle distance est supérieure aux distances se produisant en cas d'angles de fermeture identiques dans le mode de fonctionnement à cliquet.

9. Sécateur selon l'une quelconque des revendications 1 à 8, **caractérisé en ce que**, dans la deuxième position fonctionnelle, l'organe de verrouillage est supporté de manière à pouvoir pivoter autour d'un premier axe de pivotement (GS) sur le deuxième levier de préhension (G2) et autour d'un deuxième axe de pivotement (AP) sur la portion arrière (AS) de la plaque de lame lors du déplacement des leviers à main et donc du déplacement, couplé à celui-ci, de l'ensemble de coupe.

10. Sécateur selon la revendication 9, **caractérisé en ce qu'**un angle (WO, GWG) entre une première ligne passant par l'axe d'articulation (GA) de la plaque de lame et par le deuxième axe de pivotement (AP) et entre une deuxième ligne passant par le deuxième axe de pivotement (GS) et par un deuxième axe d'articulation (GB), au niveau duquel les deux leviers de préhension (G1, G2) sont reliés l'un à l'autre de manière articulée, ne dépasse pas une valeur d'angle de 15° dans la deuxième position fonctionnelle de l'organe de verrouillage.

11. Sécateur selon l'une quelconque des revendications 1 à 10, **caractérisé en ce qu'**un angle (WO, WG) entre un premier axe longitudinal fixe par rapport à la plaque de lame (MP) et un deuxième axe longitudinal fixe par rapport au deuxième levier de préhension (G2) ne change pas de plus de 5°, de préférence pas de plus de 3°, sur l'étendue du déplacement lors de l'actionnement des leviers de préhension lorsque l'organe de verrouillage se trouve dans la deuxième position fonctionnelle.

12. Sécateur selon l'une quelconque des revendications 1 à 8, **caractérisé en ce qu'**au moins une courbe de commande est réalisée sur l'organe de verrouillage et/ou sur la portion arrière de la plaque de lame et, dans la deuxième position fonctionnelle de l'organe de verrouillage, l'organe de verrouillage et la plaque de lame sont supportés l'un contre l'autre pour la transmission de la force manuelle en un point d'appui décalé en fonction de l'angle de fermeture le long de la courbe de commande.

13. Sécateur selon l'une quelconque des revendications 1 à 12, **caractérisé en ce que** l'organe de verrouillage (H1, H2) est accouplé à un élément d'actionnement (BE) et peut être déplacé par un actionnement manuel de l'élément d'actionnement entre les positions fonctionnelles.

14. Sécateur selon l'une quelconque des revendications 1 à 13, **caractérisé en ce que** l'organe de verrouillage peut être déplacé d'une seule main entre les positions fonctionnelles par l'utilisateur à l'aide d'une main venant en prise autour des leviers de préhension.

15. Sécateur selon l'une quelconque des revendications 1 à 14, **caractérisé en ce que** l'ampleur d'ouverture maximale de l'ensemble de coupe et/ou l'ampleur d'ouverture maximale des leviers de préhension est/sont dépendante(s) de la position fonctionnelle de l'organe de verrouillage.
